# EUROPEAN PATENT SPECIFICATION

(11) **EP 4 566 711 B1**
(45) Date of publication and mention of the grant of the patent: **19.08.2026**
(21) Application number: 24216035.6
(22) Date of filing: 28.11.2024
(51) Int. Cl.: B01J 31/12, B01J 31/14, B01J 31/22

(54) **METHOD OF PREPARING A HYDROGENATION CATALYST**
VERFAHREN ZUR HERSTELLUNG EINES HYDRIERUNGSKATALYSATORS
PROCÉDÉ DE PRÉPARATION D'UN CATALYSEUR D'HYDROGÉNATION

(30) Priority: 07.12.2023 US 202363607278 P
(43) Date of publication of application: 11.06.2025
(73) Proprietor: G-3 Chickadee Purchaser, LLC 1485 E Archwood Avenue, Akron, OH 44306 (US)
(72) Inventor: SPILKER, Thomas Franklin, Broadview Heights, 44147 (US)
(74) Representative: Lavoix

(56) References cited:
- CN-C- 1 127 375
- US-A1- 2021 340 306
- SENG NEON GAN ET AL: "HYDROGENATION OF NATURAL RUBBER USING NICKEL 2-ETHYLHEXANOATE CATALYST IN COMBINATION WITH TRIISOBUTYLALUMINUM", JOURNAL OF APPLIED POLYMER SCIENCE, JOHN WILEY & SONS, INC, US, vol. 59, no. 1, 3 January 1996 (1996-01-03), pages 63 - 70, XP000580694, ISSN: 0021-8995, DOI: 10.1002/(SICI)1097-4628(19960103)59:1<63::AID-APP10>3.0.CO;2-9

## Description

### FIELD

Embodiments disclosed herein relate to methods for preparation and use of a hydrogenation catalyst which find particular application in connection with the partial hydrogenation of unsaturated elastomers used in rubber compositions.

### BACKGROUND

Hydrogenation catalysts are often used for chemical modification of natural rubber and other unsaturated elastomers. This can help to provide the elastomer with greater stability against thermal, oxidative, and radiation-induced degradation. One catalyst system commonly used is a homogeneous Ziegler-Natta catalyst formed by reaction of a trialkylaluminum compound with a nickel alkyl carboxylate, such as nickel 2-ethylhexanoate or nickel (II) octanoate. The reaction may take place in a suitable solvent, such as hexane. A ratio of aluminum to nickel in the cocatalyst system is selected to provide active catalyst species while avoiding excess alkyl aluminum, which may interact with the active species to give an inactive product. See, for example Gan, et al., "Hydrogenation of Natural Rubber Using Nickel 2-Ethylhexanoate Catalyst in Combination with Triisobutylaluminum," J. Applied Polymer Science, Vol. 59, 63-70 (1996). In the method of Gan, the triisobutylaluminum is added to nickel 2-ethylhexanoate in a reaction vessel containing a natural rubber sample in hexane. The reaction vessel is pressurized with hydrogen gas. U.S. 2021/0340306 A1 to Yukimura, et al. describes hydrogenation of a functionalized copolymer in which addition of triethylaluminum is followed by addition of nickel octanoate. In both the Gan and the Yukimura methods, a ratio of Al:Ni of 3:1 was found to be effective. CN 1127375 discloses the preparation of a hydrogenation catalyst comprising triethylaluminum and nickel octoate prior to combining with the reactants

One problem with existing methods for preparation of such hydrogenation catalysts is that addition of the nickel compound into the aluminum compound, or *vice versa,* results in a variable Al:Ni ratio throughout the reaction. This can lead to inactivation of the catalyst system or insufficient active species. Additionally, long-term storage of such catalyst systems is generally not feasible.

A catalyst composition, and an apparatus and method for preparing it, are now described, which can address these and other problems.

### SUMMARY OF THE INVENTION

The invention relates to a method in accordance with claim 1 and to a system in accordance with claim 12.

Dependent claims refer to preferred embodiments of the invention.

In accordance with one exemplary embodiment, a method of forming a hydrogenation catalyst includes providing a first fluid including a first reagent in a first reagent dispensing device, the first reagent including an organoaluminum compound and providing a second fluid including a second reagent in a second reagent dispensing device, the second reagent including a nickel alkoxylate. The method further includes contemporaneously delivering the first fluid from the first reagent dispensing device and the second fluid from second reagent dispensing device to a reaction vessel at a constant stoichiometry of aluminum in the organoaluminum compound to nickel in the nickel alkoxylate, the organoaluminum compound reacting with the nickel alkoxylate in the reaction vessel to form the hydrogenation catalyst.

In various aspects of this embodiment:
At least one of the first fluid and the second fluid further may include a solvent. The solvent may be selected from the group consisting of aliphatic hydrocarbons, aromatic hydrocarbons, cycloaliphatic hydrocarbons and mixtures thereof. The solvent may be selected from the group consisting of hexane, pentane, toluene, benzene, cyclohexane and mixtures thereof.

The organoaluminum compound may be represented by Formula I: 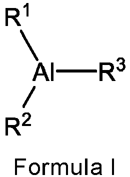 where R¹ is selected from alkyl, alkoxy, aryl, alkaryl, arylalkyl and hydrogen R² is selected from alkyl (including cycloalkyl), aryl, alkaryl, arylalkyl and hydrogen; and R³ is selected from alkyl (including cycloalkyl), aryl, alkaryl and arylalkyl.

The organoaluminum compound may include a trialkylaluminum compound. In the trialkylaluminum compound, R¹, R² and R³ may each independently be a C1 to C18 straight chain or branched alkyl group. The trialkylaluminum compound may be selected from the group consisting of trimethylaluminum, triethylaluminum, tri-n-propylaluminum, triisopropylaluminum, tri-n-butylaluminum, triisobutylaluminum, tripentylaluminum, trihexylaluminum, tricyclohexylaluminum, trioctylaluminum, and dimers and mixtures thereof.

The nickel alkoxylate may be derived from a C6 to C18 carboxylic acid. The nickel alkoxylate may be selected from the group consisting of nickel (II) octoate and nickel octanoate.

The constant stoichiometry of aluminum in the organoaluminum compound to nickel in the nickel alkoxylate may be fixed within a range of from 2:1 to 3.5:1, or up to 3:1.

The step of contemporaneously delivering the first fluid from the first reagent dispensing device and the second fluid from the second reagent dispensing device to the reaction vessel may include maintaining the constant stoichiometry of aluminum in the organoaluminum compound to nickel in the nickel alkoxylate for at least two minutes, or at least 10 minutes, or at least 30 minutes.

The first reagent dispensing device and the second reagent dispensing device may include syringes that are actuated by respective motors or by a common motor.

The delivery may include pumping the first and second fluids to a mixing point upstream of the reaction vessel and delivering a mixture of the first and second fluids from the mixing point to the reaction vessel.

The reaction vessel may be cooled during the reaction.

A hydrogenation catalyst may be formed by the method described in any of the above aspects.

A rubber composition may include a hydrogenated elastomer hydrogenated with the hydrogenation catalyst described above and at least one additive selected from the group consisting of fillers, plasticizers, zinc oxide, and a sulfur-based curing agent.

In accordance with another embodiment, in combination, an apparatus and reagents for forming a hydrogenation catalyst include a first reagent dispensing device which contains a first reagent, the first reagent including an organoaluminum compound and a second reagent dispensing device which contains a second reagent, the second reagent including a nickel alkoxylate. A first delivery tube connects the first reagent dispensing device with a mixing point. A second delivery tube connects the second reagent dispensing device with the mixing point. A common delivery tube connects the mixing point to a reaction vessel. A pressurizing mechanism pressurizes the first and second reagents so that they are delivered to the reaction vessel at a constant stoichiometry of aluminum in the organoaluminum compound to nickel in the nickel alkoxylate.

In various aspects of this embodiment:
The first and second reagent dispensing devices may include first and second syringes.

The pressurizing mechanism may include a motor which drives a plunger of at least one of the first and second syringes.

### BRIEF DESCRIPTION OF THE DRAWINGS

FIGURE 1 is a side sectional view of one embodiment of an apparatus for preparing a hydrogenation catalyst; and
FIGURE 2 is a flow chart illustrating a method for preparing a hydrogenation catalyst.

### DETAILED DESCRIPTION OF PREFERRED EMBODIMENTS

Aspects of the exemplary embodiment relate to a hydrogenation catalyst, to an apparatus for preparing a hydrogenation catalyst, to a process for preparation of the hydrogenation catalyst, and to a method of hydrogenation which makes use of the catalyst.

The hydrogenation catalyst can be used for the partial or complete hydrogenation of unsaturated hydrocarbons, such as alkenes and unsaturated elastomers, such as those used in rubber compositions. The hydrogenation catalyst can have superior activity and shelf stability, when compared with existing hydrogenation catalysts formed by reaction of a trialkyl aluminum compound with a nickel alkoxylate compound. Additionally, the catalyst can operate outside of previously used Ni:Al ratios.

In the exemplary apparatus and method, an organoaluminum compound is reacted with a nickel alkoxylate to form a complex in which nickel-containing particles of extremely small size (and thus a high active surface area) are dispersed in a gel in which the aluminum is concentrated.

Examples of nickel alkoxylates include those derived from C6 to C18 carboxylic acids, such as nickel (II) octoate (which is nickel bis(2-ethylhexanoate)) and nickel octanoate.

The organoaluminum compound contains at least one carbon to aluminum bond and can be represented by Formula I: 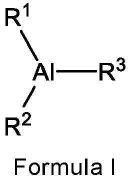 where R¹ is selected from alkyl (including cycloalkyl), alkoxy, aryl, alkaryl, arylalkyl and hydrogen; R² is selected from alkyl (including cycloalkyl), aryl, alkaryl, arylalkyl and hydrogen; and R³ is selected from alkyl (including cycloalkyl), aryl, alkaryl and arylalkyl.

In one embodiment, R¹ and R² are not hydrogen.

In one embodiment, R¹, R² and R³ are each an alkyl group, i.e., the organoaluminum compound is a trialkylaluminum compound.

In one embodiment, at least one of R¹, R² and R³ R¹, R² and R³ has a beta hydrogen.

Representative trialkylaluminum compounds include those where R¹, R² and R³ are each independently a C1 to C18 straight chain or branched alkyl group, or a C1 to C12 straight chain or branched alkyl group. Examples include trimethylaluminum, triethylaluminum, tri-n-propylaluminum, triisopropylaluminum, tri-n-butylaluminum, triisobutylaluminum, tripentylaluminum, trihexylaluminum, tricyclohexylaluminum, trioctylaluminum, and mixtures thereof. The trialkyl aluminum compound may exist in the form of a monomer or a dimer, or a mixture thereof. In one embodiment, the trialkylaluminum compound includes triisobutylaluminum.

Representative aryl and alkylaryl organoaluminum compounds include triphenylaluminum, tri-p-tolylaluminum, tribenzylaluminum, ethyldiphenylaluminum, ethyl-di-p-tolylaluminum, ethyldibenzylaluminum, diethylphenylaluminum, diethyl-p-tolylaluminum, diethylbenzylaluminum, and mixtures thereof.

Other representative organoaluminum compounds where R¹ is hydrogen include diethylaluminum hydride, di-n-propylaluminum hydride, di-n-butylaluminum hydride, diisobutylaluminum hydride, diphenylaluminum hydride, di-p-tolylaluminum hydride, dibenzylaluminum hydride, phenylethylaluminum hydride, phenyl-n-propylaluminum hydride, p-tolylethylaluminum hydride, p-tolyl-n-propylaluminum hydride, p-tolylisopropylaluminum hydride, benzylethylaluminum hydride, benzyl-n-propylaluminum hydride, and benzylisopropylaluminum hydride and mixtures thereof. Other representative organoaluminum compounds where R¹ and R² are hydrogen include ethylaluminum dihydride, butylaluminum dihydride, isobutylaluminum dihydride, octylaluminum dihydride, amylaluminum dihydride and mixtures thereof. Also included are diethylaluminum ethoxide and dipropylaluminum ethoxide.

The reaction of the reagents for forming the hydrogenation catalyst (e.g., nickel (II) octoate and triisobutylaluminum) may be carried out in a reaction vessel in a suitable solvent. The reagents may be maintained at a constant stoichiometry throughout the catalyst preparation. By "constant stoichiometry," it is meant that a molar ratio of the nickel in the nickel alkoxylate to the aluminum in the organoaluminum compound in the reaction vessel does not vary by more than ± 10% or by no more than ± 5% during preparation of the hydrogenation catalyst. The two reagents may be introduced to the reaction vessel contemporaneously, at fixed flow rates, so that the reagents in the reaction vessel are being continuously replenished, at the constant stoichiometry, while the reaction is taking place. This can be achieved with a suitable pressurizing mechanism, such as motor-driven pumps or other mechanism(s) for controlling the flow rates of both reagents through tubing that ensures the maintenance of the constant stoichiometry. In one embodiment, the pumps are syringe pumps, although other pumps, such as gear pumps, screw pumps, peristaltic pumps, rotary pumps, and the like, are also contemplated, provided that they are capable of ensuring a constant stoichiometry. In other embodiments, the flow rates may vary during the reaction, while maintaining the constant stoichiometry, e.g., through a gravity flow mechanism.

It has been found that a process which maintains a constant stoichiometry between nickel and aluminum during the preparation of the hydrogenation catalyst yields higher activity and better shelf stability than where one of the reagents is placed in the reaction vessel and the other is introduced thereafter. Further, the Al:Ni molar ratio maintained during the reaction can be outside previously established boundaries with higher activity than previously disclosed and accepted ratios.

In one embodiment, the Al:Ni molar ratio of the reagents entering the reaction vessel is maintained at a constant value in the range of 1.5:1 to 3.5:1 or in the range of 2.3:1 to 2.5:1 throughout the addition.

The solvent used in the reaction can be any organic solvent in which the two reagents (organoaluminum compound and nickel alkoxylate) are soluble. Additionally, since in the exemplary embodiment, the hydrogenation catalyst formed in the reaction remains dispersed in the solvent during subsequent use, it may be selected to be compatible with the elastomer(s) being hydrogenated. Example solvents include aprotic organic solvents, such as aliphatic, aromatic, and cycloaliphatic hydrocarbons, such as hexane, pentane, toluene, benzene, cyclohexane and mixtures thereof.

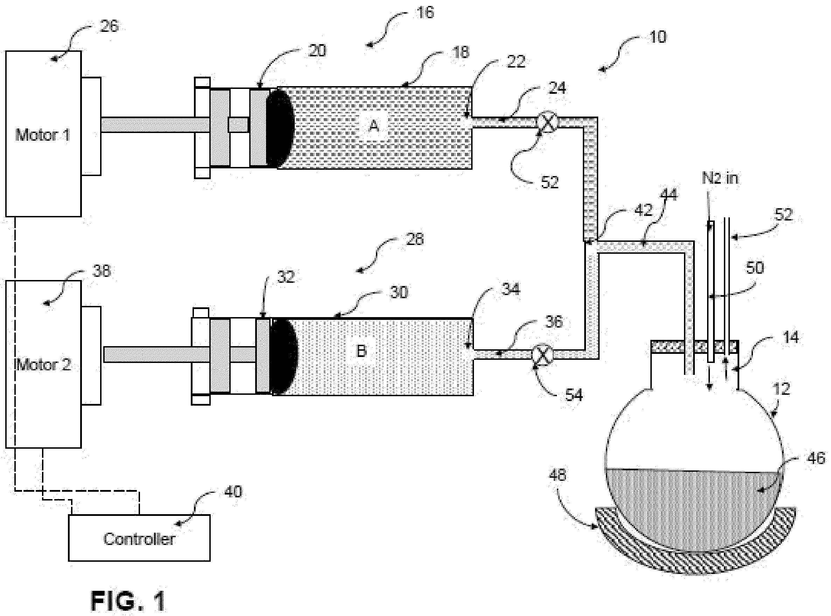

FIGURE 1 illustrates an exemplary apparatus 10 for preparing the hydrogenation catalyst. A reaction vessel 12, such as a flask, has an open end 14 for receiving the two reagents. A first reagent delivery device, such as a syringe pump 16 includes a first barrel 18 which holds a first fluid A containing a first of the reagents (e.g., the organoaluminum compound), optionally dissolved or dispersed in a suitable solvent, such as hexane. A first plunger 20 forces the first fluid A containing the first reagent out of the first barrel 18 through a first outlet 22 and into a first delivery tube 24. The first plunger 20 is advanced by a first motor 26, such as a first stepper motor, while the first barrel is maintained in a fixed position. A similarly configured second reagent delivery device, such as a syringe pump 28 includes a second barrel 30 which holds a second fluid B containing a second of the reagents (e.g., the nickel alkoxylate), optionally dissolved or dispersed in a suitable solvent, such a hexane, or a different solvent. A second plunger 32 forces the fluid B containing the second reagent out of the second barrel 30 through a second outlet 34 and into a second delivery tube 36. The second plunger 32 is advanced by a second motor 38, such as a second stepper motor, while the second barrel is maintained in a fixed position. In another embodiment (not shown), plungers 20, 32 may be driven by a common motor. The motor(s) may be under the control of a common controller 40, as shown, or may be separately controlled. The constant ratio is defined by the flow rate and the concentration of the reagent in the syringes. Alternatively, the motors are manually adjusted to provide a constant delivery rate. As will be appreciated, other pressurizing mechanisms than the illustrated motors which pressurize the first and second reagents so that they are delivered to the reaction vessel at a constant stoichiometry of aluminum in the organoaluminum compound to nickel in the nickel alkoxylate are also contemplated.

In the illustrated embodiment, the first and second delivery tubes 24, 36 are connected at a mixing point 42, e.g., a T-shaped junction, located upstream of the flask 12, such that a mixture of the first and second reagents enters the flask through a common delivery tube 44. In another embodiment (not shown) the first and second reagents A, B are delivered to the flask through completely separate tubes and only mix within the flask 12.

The mixture 46 of reagents and their reaction products, within the flask 12 may be maintained at a suitable reaction temperature for forming the hydrogenation catalyst while avoiding decomposition of the reaction product, such as below 50°C, or below 40°C, e.g., through use of a cooling jacket 48.

The reaction may be carried out under an inert gas, such as nitrogen. For example, a suitable gas delivery system, illustrated by tubes 50, 52, flushes the flask with nitrogen prior to, and/or during, introduction of the reagents.

Prior to starting the motors 26, 28, the reagent delivery devices 16, 18 may be isolated from each other, upstream of the mixing point 42, e.g., by valves 54, 56 which may be positioned in the respective delivery tubes 24, 36 or at the outlets 22, 24 of the delivery devices 16, 28. The valves may be under the control of the controller(s) 40, such that the valves are opened just prior to actuating the motors 26, 38.

The reaction product formed in the flask may be collected and stored for up to several weeks or, in some cases, a month or more, before use in hydrogenating an elastomer without a significant loss in activity. The shelf stability is a significant advantage over similar hydrogenation catalysts, which rapidly lose activity. Such existing catalysts may be prepared by a conventional process in which one of the reagents is added to the other, resulting in a change in the stoichiometry of the metals throughout the reaction.

Another advantage over the existing catalysts is that the activity of the catalyst, at a given temperature, is higher than for an existing catalyst containing the same amount of nickel, in moles. Thus, the present hydrogenation catalyst can be used in lesser amounts, and/or for shorter times, and/or at lower temperatures to achieve a desired level of hydrogenation as the existing catalyst. The ability to hydrogenate an elastomer at a lower temperature and/or time has advantages in some cases, such as when the elastomer is functionalized with a moiety which tends to degrade or cross-link. The ability to hydrogenate an elastomer with a lower amount of catalyst can result in significant cost savings and may be more environmentally desirable. The ability to hydrogenate an elastomer in a shorter time (about a quarter of the time, or less, is observed for a comparable amount of nickel at the same reaction temperature) allows the hydrogenated elastomer to be produced at a faster rate, saving time and operating costs.

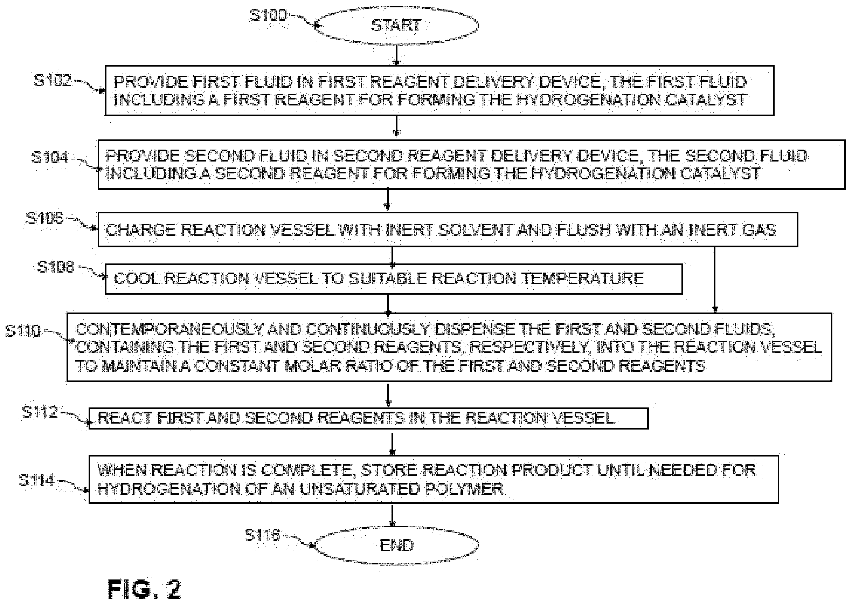

FIGURE 2 illustrates a method of preparing the hydrogenation catalyst. The method begins at S100.

At S102, a first fluid including a first reagent, such as an organoaluminum compound is provided in a first reagent delivery device, such as a first syringe. The first reagent may be dissolved in an organic solvent, such as hexane, e.g., at a ratio by weight of reagent:solvent of from 50:50 to 75:25, such as 65:35.

At S104, a second fluid including a second reagent, such as a nickel alkoxylate, is provided, separate from the first reagent, in a second reagent delivery device, such as a second syringe. The second reagent may be dissolved in an organic solvent, such as hexane, e.g., at a ratio by weight of reagent:solvent of from 50:50 to 75:25, such as 65:35.

At S106, a reaction vessel may be charged with a portion of an inert solvent, such as hexane, and flushed with an inert gas, such as nitrogen.

At S108, the reaction vessel may be heated to a suitable temperature for reaction to occur between the reagents.

At S110, the first fluid, containing the first reagent, is delivered under pressure, continuously, over a period of time, from the first reagent delivery device into the reaction vessel while contemporaneously delivering the second fluid containing the second reagent continuously, from the second reagent delivery device, under pressure, into the reaction vessel to maintain a constant molar ratio of the first and second reagents. The dispensing may be continuous, e.g., for a time period of at least two minutes, or at least five minutes, or at least 30 minutes for an illustrative 500 ml batch, or for sufficient time to maintain the reaction temperature in the reaction vessel below 40°C.

At S112, the first and second reagents are reacted together in the reaction vessel to form the hydrogenation catalyst.

At S114, the hydrogenation catalyst may be stored in the reaction vessel, or transferred to a separate storage vessel, until needed for a hydrogenation process. No further treatment of the catalyst is required, after completion of the reaction, such as separation of the catalyst from the solvent. It can be used, intermixed with the solvent, in the form of a gel.

The method ends at S116.

The reaction product is a colloidal mixture of small particles of nickel dispersed in in an aluminum-containing gel. The nickel metal (nickel (0)) particles are much smaller and more uniform in size (below 10 nanometers, on average) than can be achieved in existing methods of preparation which do not use the constant stoichiometry. These small particles provide a high surface area which yields highly effective hydrogenation catalyst for hydrogenating unsaturated elastomers.

The hydrogenation catalyst described herein can be used for the hydrogenation of one or more polydiene elastomers that contain unsaturation in the form of double bonds. Such elastomers are polymers derived from a conjugated diene monomer, such as butadiene, and optionally one or more other monomers, such as a vinyl aromatic monomer, e.g., styrene. The elastomer may include at least 40 %, or at least 90 %, or at least 92 % of cis 1,4 microstructure in the polydiene portion of the elastomer.

For example, the elastomer may be a homopolymer formed from 1,3-butadiene monomers (polybutadiene, PBD) or a copolymer formed from a mixture of 1,3-butadiene monomers and styrene (styrene-butadiene rubber, SBR, which may be formed by solution polymerization, SSBR, or emulsion polymerization, ESBR), and /or other polydiene-based elastomers. Examples of elastomers which can be hydrogenated with the exemplary hydrogenation catalyst include polybutadiene rubber, styrene/butadiene rubber, styrene/isoprene/butadiene rubber, butadiene/acrylonitrile rubber, styrene/butadiene/acrylonitrile rubber, methyl methacrylate/butadiene/styrene rubber, and polymers derived from substituted butadiene, such as methylbutadiene or dimethylbutadiene, pentadiene, and the like.

The elastomer to be hydrogenated may be functionalized, e.g., at the terminal end, as described, for example, in US Application Serial Nos. 18/155,927 entitled FUNCTIONALIZED HYDROGENATED POLYMERS, 18/155,835, entitled FUNCTIONALIZED HYDROGENATED POLYMERS, 18/155,799, entitled FUNCTIONALIZED HYDROGENATED POLYMERS, and 18/155,815, entitled HYDROGENATED POLYMERS WITH SILOXYTRITHIOCARBONATE TERMINATION, all filed on January 18, 2023. Functionalization may also be performed intermediate the terminal ends. In another embodiment, the elastomer is functionalized with an alkoxysilane group and optionally at least one functional group selected from the group consisting of primary amines and thiols. For example, a (co)polymer chain of a conjugated diene or a conjugated diene and an aromatic vinyl compound may be terminated with a terminating agent compound having a protected primary amino group and an alkoxysilyl group, as described, for example, in US Pat. No. 7,342,070. Another SBR functionalized with an alkoxysilane group and a thiol is described in US Pub. No. 20080287601A1.

Hydrogenation of the polydiene elastomer may be partial or complete. By partial, it is meant that fewer than all of the double bonds present in the polydiene segment(s) of the elastomer are hydrogenated by the catalyst. For example, at least 10% or at least 20%, or at least 30%, or at least 40%, or at least 60%, or at least 80% of the double bonds present in the polydiene segment(s) of the elastomer become saturated by the hydrogenation. In some embodiments, up to 100% of the double bonds present in the polydiene segment(s) of the elastomer become saturated by the hydrogenation.

The partially or fully hydrogenated elastomer can be used in a rubber composition. The rubber composition is formed of ingredients including, in total, 100 parts of an elastomer component. The total amount of 100 parts of elastomer or rubber is used so that the amount of other ingredients may be listed in amounts of phr or the number of parts per hundred parts of rubber (or 100 parts of the elastomer component). The elastomer component includes the hydrogenated elastomer with the optional use of other elastomers, such as natural rubber and synthetic polymers, such as polyisoprene (including cis-1,4-polyisoprene), and as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid, vinyl esters and various unsaturated aldehydes, ketones and ethers, e.g., acrolein, methyl isopropenyl ketone, and vinylethyl ether. Other elastomers include halogen-containing elastomers, including neoprene (polychloroprene), and halobutyl rubber, such as chlorobutyl rubber and bromobutyl rubber; ethylene/propylene terpolymers, also known as ethylene/propylene/diene monomer (EPDM), and in particular, ethylene/propylene/dicyclopentadiene terpolymers; alkoxy-silyl end functionalized solution polymerized polymers (SBR, PBR, IBR and SIBR), silicon-coupled and tin-coupled star-branched polymers, and combinations thereof.

A ratio by weight of the hydrogenated elastomer to other elastomers, when used, may be from 5:95 to 99:1, or from 10:90 to 90:10.

The rubber composition may include one or more fillers, such as silica and/or carbon black, optionally, an organosilane coupling agent, a plasticizer, such as an oil and/or a resin, optionally, a wax, a sulfur-based curing agent, one or more cure activators, such as zinc oxide and/or an organic cure activator, an accelerator, and optionally one or more additional additives, such as cure inhibitors, free radical initiators, antioxidants, antiozonants, peptizers, and the like.

Silica, e.g., precipitated silica, may be used in the rubber composition in an amount of at least 5 phr and/or up to 160 phr. The silica may have a CTAB specific surface area of at least 120 m²/g, or at least 140 m²/g, or up to 400 m²/g, or up to 300 m²/g, or up to 230 m²/g. CTAB surface area is measured according to ASTM D6845-20, "Standard Test Method for Silica, Precipitated, Hydrated-CTAB (Cetyltrimethylammonium Bromide) Surface Area."

Carbon black, where used, may be present in the rubber composition in an amount of at least 2 phr and/or up to 60 phr. The carbon black may have a specific surface area of at least 8, or at least 20, or at least 100, or at least 120, or up to 132 m²/kg, as determined according to ASTM D6556-21, "Standard Test Method for Carbon Black-Total and External Surface Area by Nitrogen Adsorption."

Other particulate fillers which may be used in the rubber composition include alumina, aluminum hydroxide, clay (reinforcing grades), magnesium hydroxide, boron nitride, aluminum nitride, titanium dioxide, and combinations thereof. Such particulate fillers, where used may be present in a total amount of 1 to 30 phr, or up to 20 phr, or up to 10 phr, or up to 5 phr.

The organosilane coupling agent, where used, assists in dispersing the silica and in bonding the silica to the elastomers. The amount of organosilane coupling agent in the rubber composition may depend on the amount of silica used in the rubber composition, e.g., a ratio by weight of coupling agent to silica may be from 2:100 to 10:100. The amount of organosilane coupling agent may be, for example, at least 2 phr, or at least 5 phr, or up to 16 phr, or up to 10 phr.

Examples of organosilane coupling agents include those containing groups such as alkyl alkoxy, mercapto, blocked mercapto, sulfide-containing (e.g., monosulfide-based alkoxy-containing, disulfide-based alkoxy-containing, tetrasulfide-based alkoxy-containing), amino, vinyl, epoxy, and combinations thereof. Specific examples include 3-octanoylthio-1-propyltriethoxysilane; the reaction product of a hydrocarbon based diol (e.g., 2-methyl-1,3-propanediol) with S-[3-(triethoxysilyl)propyl] thiooctanoate; and bis(trialkoxysilylorgano)polysulfides, including bis-(3-triethoxysilylpropyl) polysulfides with an average of from 2 to 4 connecting sulfur atoms in the polysulfidic bridge.

The processing oil, where used, may be at least 2 phr, or at least 3 phr, or at least 4 phr, or up to 15 phr, or up to 12 phr, or up to 10 phr, or up to 6 phr and may be selected from aromatic oils, paraffinic oils, naphthenic oils, vegetable oils, and mixtures thereof.

The resin, where used, may be at least 5 phr, or at least 10 phr, or at least 20 phr, or up to 90 phr, or up to 70 phr. Unlike oils, which are liquids at room temperature (20-25°C), resins are generally solid or highly viscous at room temperature. For example, the resin may have a glass transition temperature (Tg) of at least 40°, or at least 50°C, or up to 70°C, as determined using DSC according to ASTM D6604. Examples of resins include hydrocarbon traction resins and tackifier resins. Hydrocarbon traction resins include C5 resins, including polydicyclopentadiene (DCPD) and hydrogenated equivalents thereof such as HC5 resins and hydrogenated DCPD resins (HDCPD); C9 resins, and hydrogenated equivalents thereof such as HC9 resins; and copolymers and mixtures thereof, such as C5/C9 resins, including DCPD/C9 resins, HDCPD/C9 resins, and mixtures thereof. In the abbreviations, H indicates that the resin is at least partially hydrogenated, and C5 and C9 indicate the number of carbon atoms, prior to any dimerization or functionalization, in the monomers from which the resins are formed. Other hydrocarbon traction resins which may be used include terpene-phenol resins, terpene resins, terpene-styrene resins, styrene/alpha-methylstyrene resins, and coumarone-indene resins. The resin may be at least partially hydrogenated. Tackifier resins may include gum rosin and modified derivatives thereof.

The wax, where used, may be present at 1-5 phr, or up to 3 phr. Example waxes include paraffin wax, microcrystalline wax, and mixtures thereof.

Sulfur-based curing agents may be used in an amount of from 0.1 to 10 phr, such as at least 0.4 phr, or up 5 phr, or up to 2 phr. Examples of suitable sulfur-based curing agents include elemental sulfur (free sulfur), insoluble polymeric sulfur, soluble sulfur, and sulfur donating vulcanizing agents, for example, an amine disulfide, polymeric polysulfide, or sulfur olefin adduct, and mixtures thereof.

Cure accelerators and activators act as catalysts for the sulfur-based curing agent. Cure accelerators are used to control the time and/or temperature required for vulcanization and to improve the properties of the cured rubber composition. The amount of the cure accelerator may be from 0.1 to 10 phr, or at least 0.5 phr, or at least 2 phr, or up to 8 phr, or up to 6 phr.

Examples of accelerators include thiazole cure accelerators, such as 2-mercaptobenzothiazole and 2,2'-dithiobis(benzothiazole) (MBTS); guanidine cure accelerators, such as diphenyl guanidine (DPG); sulfenamide cure accelerators, such as benzothiazole sulfenamides, such as N-cyclohexyl-2-benzothiazolesulfenamide (CBS), and N-tert-butyl-2-benzothiazole-sulfenamide (TBBS); ultra-accelerators, such as 1,6-bis(N,N'-dibenzylthiocarbamoyldithio)hexane (BDBZTH); and combinations thereof.

Zinc oxide acts as an inorganic cure activator and may be used in an amount of at least 2 phr, and/or up to 10 phr.

Organic cure activators include stearic acid, palmitic acid, lauric acid, mixtures thereof, zinc salts of each of the foregoing, and thiourea compounds, e.g., thiourea, and dihydrocarbylthioureas such as dialkylthioureas and diarylthioureas, and mixtures thereof. The total amount of organic cure activator(s), such as a mixture of fatty acids, may be from 0.1 to 8 phr, such as at least 0.5 phr, or at least 1 phr, or at least 2 phr, or up to 6 phr.

Rubber compositions may be prepared by mixing the elastomers, fillers, and other rubber compounding ingredients, not including the curing agent, in at least one sequential mixing stage with at least one mechanical mixer, usually referred to as a "non-productive" mixing stage, or stage(s), to an elevated temperature (e.g., 130°C - 200°C) under high shear rubber mixing conditions, followed by a final "productive" mixing stage, in which a sulfur-based cure package, such as a sulfur-based curing agent and cure accelerator(s), is added to the mixture and mixed at a lower mixing temperature (e.g., below 120°C) to avoid unnecessarily pre-curing the rubber mixture during the productive mixing stage. Mixing may be performed, for example, by kneading the ingredients together in a Banbury mixer or on a milled roll. The rubber composition may be cooled to a temperature below 40 °C between each of the mixing stages.

When the cure package is thoroughly mixed into the rubber composition, the rubber composition may be molded or otherwise formed into the shape of a green component, such as a part of a tire, such as a tire tread or an inner liner. The temperature of the green component may be raised to effect cure. Curing of a pneumatic tire or a part thereof may be carried out at a temperature of from 120°C to 200°C, e.g., at least 140°C, or up to 180°C, or 150°C, for at least 10 minutes. Any of the usual vulcanization processes may be used, such as heating in a press or mold, or heating with superheated steam or hot air. Such tires can be built, shaped, molded and cured by various methods which are known and will be readily apparent to those having skill in such art.

In one embodiment, a tire is provided, the tire having a tread which is formed, at least in part, from the exemplary rubber composition formed with the hydrogenated elastomer described herein. Other parts of the tire, such as the tire sidewalls and innerliner, may additionally, or alternatively, be formed, at least in part, from a rubber composition as described herein. The tire may be a pneumatic tire for an on-the-road vehicle, such as a bus or truck, or an automobile, or a tire for an off-road vehicle, airplane or the like. The rubber composition is not limited to use in tires but may find application in rubber gloves, hoses, surgical instruments, and the like.

Hydrogenation of the elastomer has several advantages. The reduction in the number of double bonds reduces the opportunity for degradation of the rubber product. Degradation caused by ozone tends to reduce the molecular weight of the polymer, while oxidation of the polymer at the allylic sites, leading to hardening. By reducing the number of double bonds, the resulting product is more durable. Another advantage of reducing the number of double bonds is that the tensile strength of the rubber composition is increased. For example, the tensile strength may be increased by about 50%. Improvements in tire treadwear may also occur.

Each of the documents referred to above is incorporated herein by reference. Singular forms, such as "a" and "an" are intended to encompass plural forms unless the context indicates otherwise. Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. It is to be understood that the upper and lower amount, range, and ratio limits set forth herein may be independently combined. Similarly, the ranges and amounts for each element of the invention may be used together with ranges or amounts for any of the other elements.

## Claims

1. A method of forming a hydrogenation catalyst, the method comprising:
providing a first fluid including a first reagent in a first reagent dispensing device, the first reagent including an organoaluminum compound;
providing a second fluid including a second reagent in a second reagent dispensing device, the second reagent including a nickel alkoxylate;
contemporaneously delivering the first fluid from the first reagent dispensing device and delivering the second fluid from the second reagent dispensing device to a reaction vessel at a constant stoichiometry of aluminum in the organoaluminum compound to nickel in the nickel alkoxylate, the organoaluminum compound reacting with the nickel alkoxylate in the reaction vessel to form the hydrogenation catalyst.

2. The method of claim 1, wherein at least one of the first fluid and the second fluid further includes a solvent, the solvent being preferably selected from the group consisting of aliphatic hydrocarbons, aromatic hydrocarbons, cycloaliphatic hydrocarbons and mixtures thereof.

3. The method of claim 2, wherein the solvent is selected from the group consisting of hexane, pentane, toluene, benzene, cyclohexane and mixtures thereof.

4. The method of at least one of the previous claims, wherein the organoaluminum compound is represented by Formula I: 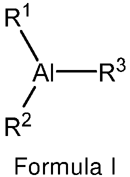 where R¹ is selected from alkyl, alkoxy, aryl, alkaryl, arylalkyl and hydrogen; R² is selected from alkyl (including cycloalkyl), aryl, alkaryl, arylalkyl and hydrogen; and R³ is selected from alkyl (including cycloalkyl), aryl, alkaryl and arylalkyl; and/or wherein the organoaluminum compound includes a trialkylaluminum compound.

5. The method of claim 4, wherein in the trialkylaluminum compound, R¹, R² and R³ are each independently a C1 to C18 straight chain or branched alkyl group; and/or wherein the trialkylaluminum compound is selected from the group consisting of trimethylaluminum, triethylaluminum, tri-n-propylaluminum, triisopropylaluminum, tri-n-butylaluminum, triisobutylaluminum, tripentylaluminum, trihexylaluminum, tricyclohexylaluminum, trioctylaluminum, and dimers and mixtures thereof.

6. The method of at least one of the previous claims, wherein the nickel alkoxylate is derived from a C6 to C18 carboxylic acids; and/or wherein the nickel alkoxylate is selected from the group consisting of nickel (II) octoate and nickel octanoate.

7. The method of at least one of the previous claims, wherein the constant stoichiometry of aluminum in the organoaluminum compound to nickel in the nickel alkoxylate is fixed within a range of from 2:1 to 3.5:1.

8. The method of at least one of the previous claims, wherein in the contemporaneously delivering the first fluid from the first reagent dispensing device and the second fluid from the second reagent dispensing device to the reaction vessel comprises maintaining the constant stoichiometry of aluminum in the organoaluminum compound to nickel in the nickel alkoxylate for at least two or for at least ten minutes.

9. The method of at least one of the previous claims, wherein the first reagent dispensing device and the second reagent dispensing device comprise syringes that are actuated by respective motors or by a common motor.

10. The method of at least one of the previous claims, wherein the delivery comprises pumping the first and second fluids to a mixing point upstream of the reaction vessel and delivering a mixture of the first and second fluids from the mixing point to the reaction vessel.

11. The method of at least one of the previous claims, wherein the method further includes cooling the reaction vessel during the contemporaneously delivering step.

12. A system comprising an apparatus and reagents for forming a hydrogenation catalyst, the system comprising:
a first reagent dispensing device which contains a first reagent, the first reagent including an organoaluminum compound;
a second reagent dispensing device which contains a second reagent, the second reagent including a nickel alkoxylate;
a first delivery tube which connects the first reagent dispensing device with a mixing point;
a second delivery tube which connects the second reagent dispensing device with the mixing point;
a reaction vessel;
a common delivery tube which connects the mixing point to the reaction vessel; and
a pressurizing mechanism which pressurizes the first and second reagents so that they are delivered to the reaction vessel at a constant stoichiometry of aluminum in the organoaluminum compound to nickel in the nickel alkoxylate.

13. The system of claim 12, wherein the first and second reagent dispensing devices comprise first and second syringes and, optionally, wherein the pressurizing mechanism comprises a motor which drives a plunger of at least one of the first and second syringes.

## Patentansprüche

1. Ein Verfahren zur Bildung eines Hydrierkatalysators, wobei das Verfahren umfasst:
Bereitstellen eines ersten Fluids, das ein erstes Reagenz beinhaltet, in einer ersten Reagenzabgabevorrichtung, wobei das erste Reagenz eine Organoaluminiumverbindung beinhaltet;
Bereitstellen eines zweiten Fluids, das ein zweites Reagenz beinhaltet, in einer zweiten Reagenzabgabevorrichtung, wobei das zweite Reagenz ein Nickelalkoxylat beinhaltet;
gleichzeitiges Abgeben des ersten Fluids aus der ersten Reagenzabgabevorrichtung und Abgeben des zweiten Fluids aus der zweiten Reagenzabgabevorrichtung an ein Reaktionsgefäß bei einer konstanten Stöchiometrie von Aluminium in der Organoaluminiumverbindung zu Nickel in dem Nickelalkoxylat, wobei die Organoaluminiumverbindung mit dem Nickelalkoxylat in dem Reaktionsgefäß reagiert, um den Hydrierkatalysator zu bilden.

2. Das Verfahren nach Anspruch 1, wobei mindestens eines von dem ersten Fluid und dem zweiten Fluid ferner ein Lösungsmittel beinhaltet, wobei das Lösungsmittel vorzugsweise aus der Gruppe ausgewählt ist, die aus aliphatischen Kohlenwasserstoffen, aromatischen Kohlenwasserstoffen, cycloaliphatischen Kohlenwasserstoffen und Mischungen davon besteht.

3. Das Verfahren nach Anspruch 2, wobei das Lösungsmittel aus der Gruppe ausgewählt ist, die aus Hexan, Pentan, Toluol, Benzol, Cyclohexan und Mischungen davon besteht.

4. Das Verfahren nach mindestens einem der vorhergehenden Ansprüche, wobei die Organoaluminiumverbindung durch Formel I dargestellt ist: 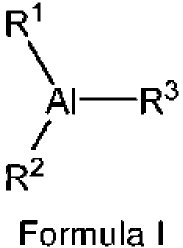 wobei R¹ aus Alkyl, Alkoxy, Aryl, Alkaryl, Arylalkyl und Wasserstoff ausgewählt ist; R² aus Alkyl (einschließlich Cycloalkyl), Aryl, Alkaryl, Arylalkyl und Wasserstoff ausgewählt ist; und R³ aus Alkyl (einschließlich Cycloalkyl), Aryl, Alkaryl und Arylalkyl ausgewählt ist; und/oder wobei die Organoaluminiumverbindung eine Trialkylaluminiumverbindung beinhaltet.

5. Das Verfahren nach Anspruch 4, wobei in der Trialkylaluminiumverbindung R¹, R² und R³ jeweils unabhängig eine geradkettige oder verzweigte C1- bis C18-Alkylgruppe sind; und/oder wobei die Trialkylaluminiumverbindung aus der Gruppe ausgewählt ist, die aus Trimethylaluminium, Triethylaluminium, Tri-n-propylaluminium, Triisopropylaluminium, Tri-n-butylaluminium, Triisobutylaluminium, Tripentylaluminium, Trihexylaluminium, Tricyclohexylaluminium, Trioctylaluminium und Dimeren und Mischungen davon besteht.

6. Das Verfahren nach mindestens einem der vorhergehenden Ansprüche, wobei das Nickelalkoxylat von einer C6- bis C18-Carbonsäuren abgeleitet ist; und/oder wobei das Nickelalkoxylat aus der Gruppe ausgewählt ist, die aus Nickel(II)-octoat und Nickeloctanoat besteht.

7. Das Verfahren nach mindestens einem der vorhergehenden Ansprüche, wobei die konstante Stöchiometrie von Aluminium in der Organoaluminiumverbindung zu Nickel in dem Nickelalkoxylat innerhalb eines Bereichs von 2:1 bis 3,5:1 festgelegt ist.

8. Das Verfahren nach mindestens einem der vorhergehenden Ansprüche, wobei bei dem gleichzeitigen Abgeben des ersten Fluids aus der ersten Reagenzabgabevorrichtung und des zweiten Fluids aus der zweiten Reagenzabgabevorrichtung an das Reaktionsgefäß das Aufrechterhalten der konstanten Stöchiometrie von Aluminium in der Organoaluminiumverbindung zu Nickel in dem Nickelalkoxylat für mindestens zwei oder für mindestens zehn Minuten umfasst.

9. Das Verfahren nach mindestens einem der vorhergehenden Ansprüche, wobei die erste Reagenzabgabevorrichtung und die zweite Reagenzabgabevorrichtung Spritzen umfassen, die durch jeweilige Motoren oder durch einen gemeinsamen Motor betätigt werden.

10. Das Verfahren nach mindestens einem der vorhergehenden Ansprüche, wobei die Abgabe das Pumpen des ersten und zweiten Fluids zu einem Mischpunkt stromaufwärts des Reaktionsgefäßes und das Abgeben einer Mischung des ersten und zweiten Fluids von dem Mischpunkt an das Reaktionsgefäß umfasst.

11. Das Verfahren nach mindestens einem der vorhergehenden Ansprüche, wobei das Verfahren ferner das Kühlen des Reaktionsgefäßes während des Schritts des gleichzeitigen Abgebens beinhaltet.

12. Ein System, umfassend eine Vorrichtung und Reagenzien zur Bildung eines Hydrierkatalysators, wobei das System umfasst:
eine erste Reagenzabgabevorrichtung, die ein erstes Reagenz enthält, wobei das erste Reagenz eine Organoaluminiumverbindung beinhaltet;
eine zweite Reagenzabgabevorrichtung, die ein zweites Reagenz enthält, wobei das zweite Reagenz ein Nickelalkoxylat beinhaltet;
ein erstes Abgaberohr, das die erste Reagenzabgabevorrichtung mit einem Mischpunkt verbindet;
ein zweites Abgaberohr, das die zweite Reagenzabgabevorrichtung mit dem Mischpunkt verbindet;
ein Reaktionsgefäß;
ein gemeinsames Abgaberohr, das den Mischpunkt mit dem Reaktionsgefäß verbindet; und
ein Druckbeaufschlagungsmechanismus, der das erste und zweite Reagenz mit Druck beaufschlagt, sodass sie an das Reaktionsgefäß bei einer konstanten Stöchiometrie von Aluminium in der Organoaluminiumverbindung zu Nickel in dem Nickelalkoxylat abgegeben werden.

13. Das System nach Anspruch 12, wobei die erste und zweite Reagenzabgabevorrichtung erste und zweite Spritzen umfassen und wobei optional der Druckbeaufschlagungsmechanismus einen Motor umfasst, der einen Kolben von mindestens einer der ersten und zweiten Spritzen antreibt.

## Revendications

1. Procédé de formation d'un catalyseur d'hydrogénation, le procédé comprenant :
fournir un premier fluide comprenant un premier réactif dans un premier dispositif de distribution de réactif, le premier réactif comprenant un composé organoaluminique ;
fournir un second fluide comprenant un second réactif dans un second dispositif de distribution de réactif, le second réactif comprenant un alcoxylate de nickel ;
délivrer simultanément le premier fluide depuis le premier dispositif de distribution de réactif et délivrer le second fluide depuis le second dispositif de distribution de réactif à un récipient de réaction à une stœchiométrie constante de l'aluminium dans le composé organoaluminique par rapport au nickel dans l'alcoxylate de nickel, le composé organoaluminique réagissant avec l'alcoxylate de nickel dans le récipient de réaction pour former le catalyseur d'hydrogénation.

2. Procédé selon la revendication 1, dans lequel au moins l'un du premier fluide et du second fluide comprend en outre un solvant, le solvant étant de préférence choisi dans le groupe constitué d'hydrocarbures aliphatiques, d'hydrocarbures aromatiques, d'hydrocarbures cycloaliphatiques et de mélanges de ceux-ci.

3. Procédé selon la revendication 2, dans lequel le solvant est choisi dans le groupe constitué d'hexane, de pentane, de toluène, de benzène, de cyclohexane et de mélanges de ceux-ci.

4. Procédé selon au moins l'une des revendications précédentes, dans lequel le composé organoaluminique est représenté par la Formule I : 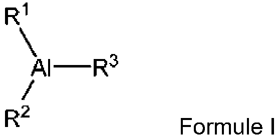 où R¹ est choisi parmi alkyle, alcoxy, aryle, alkaryle, arylalkyle et hydrogène ; R² est choisi parmi alkyle (comprenant cycloalkyle), aryle, alkaryle, arylalkyle et hydrogène ; et R³ est choisi parmi alkyle (comprenant cycloalkyle), aryle, alkaryle et arylalkyle ; et/ou dans lequel le composé organoaluminique comprend un composé de trialkylaluminium.

5. Procédé selon la revendication 4, dans lequel dans le composé de trialkylaluminium, R¹, R² et R³sont chacun indépendamment un groupe alkyle à chaîne droite ou ramifiée en C1 à C18 ; et/ou dans lequel le composé de trialkylaluminium est choisi dans le groupe constitué de triméthylaluminium, triéthylaluminium, tri-n-propylaluminium, triisopropylaluminium, tri-n-butylaluminium, triisobutylaluminium, tripentylaluminium, trihexylaluminium, tricyclohexylaluminium, trioctylaluminium, et dimères et mélanges de ceux-ci.

6. Procédé selon au moins l'une des revendications précédentes, dans lequel l'alcoxylate de nickel est dérivé d'acides carboxyliques en C6 à C18 ; et/ou dans lequel l'alcoxylate de nickel est choisi dans le groupe constitué d'octoate de nickel (II) et d'octanoate de nickel.

7. Procédé selon au moins l'une des revendications précédentes, dans lequel la stœchiométrie constante de l'aluminium dans le composé organoaluminique par rapport au nickel dans l'alcoxylate de nickel est fixée dans une plage allant de 2:1 à 3,5:1.

8. Procédé selon au moins l'une des revendications précédentes, dans lequel dans la délivrance simultanée du premier fluide depuis le premier dispositif de distribution de réactif et du second fluide depuis le second dispositif de distribution de réactif au récipient de réaction comprend le maintien de la stœchiométrie constante de l'aluminium dans le composé organoaluminique par rapport au nickel dans l'alcoxylate de nickel pendant au moins deux ou pendant au moins dix minutes.

9. Procédé selon au moins l'une des revendications précédentes, dans lequel le premier dispositif de distribution de réactif et le second dispositif de distribution de réactif comprennent des seringues qui sont actionnées par des moteurs respectifs ou par un moteur commun.

10. Procédé selon au moins l'une des revendications précédentes, dans lequel la délivrance comprend le pompage des premier et second fluides jusqu'à un point de mélange en amont du récipient de réaction et la délivrance d'un mélange des premier et second fluides depuis le point de mélange jusqu'au récipient de réaction.

11. Procédé selon au moins l'une des revendications précédentes, dans lequel le procédé comprend en outre le refroidissement du récipient de réaction pendant l'étape de délivrance simultanée.

12. Système comprenant un appareil et des réactifs pour former un catalyseur d'hydrogénation, le système comprenant :
un premier dispositif de distribution de réactif qui contient un premier réactif, le premier réactif comprenant un composé organoaluminique ;
un second dispositif de distribution de réactif qui contient un second réactif, le second réactif comprenant un alcoxylate de nickel ;
un premier tube de délivrance qui relie le premier dispositif de distribution de réactif à un point de mélange ;
un second tube de délivrance qui relie le second dispositif de distribution de réactif au point de mélange ;
un récipient de réaction ;
un tube de délivrance commun qui relie le point de mélange au récipient de réaction ; et
un mécanisme de mise sous pression qui met sous pression les premier et second réactifs de sorte qu'ils soient délivrés au récipient de réaction à une stœchiométrie constante de l'aluminium dans le composé organoaluminique par rapport au nickel dans l'alcoxylate de nickel.

13. Système selon la revendication 12, dans lequel les premier et second dispositifs de distribution de réactif comprennent des première et seconde seringues et, éventuellement, dans lequel le mécanisme de mise sous pression comprend un moteur qui entraîne un piston d'au moins l'une des première et seconde seringues.
